# EUROPÄISCHE PATENTSCHRIFT

(11) **EP 1 571 960 B1**
(45) Veröffentlichungstag und Bekanntmachung des Hinweises auf die Patenterteilung: **10.01.2007**
(21) Anmeldenummer: 03813546.3
(22) Anmeldetag: 13.08.2003
(51) Int. Cl.: A47L 13/16, A47L 17/08, B24D 11/00, B29C 43/22, B29C 43/02

(54) **VERFAHREN ZUR HERSTELLUNG EINES SCHEUERKÖRPERS**
METHOD FOR THE PRODUCTION OF A SCOURING BODY
PROCEDE DE FABRICATION D'UN CORPS DE NETTOYAGE PAR FROTTEMENT

(30) Priorität: 19.12.2002 DE 10259540
(43) Veröffentlichungstag der Anmeldung: 14.09.2005
(73) Patentinhaber: Carl Freudenberg KG, 69469 Weinheim (DE)
(72) Erfinder: SCHINDLER, Thomas, 86316 Friedberg (DE)
(86) Internationale Anmeldenummer: PCT/EP2003/008975
(87) Internationale Veröffentlichungsnummer: WO 2004/056253

(56) Entgegenhaltungen:
- EP-A- 0 696 432
- US-A- 3 116 574
- US-A- 3 976 525
- US-A- 5 152 917

## Beschreibung

Die Erfindung betrifft ein Verfahren zur Herstellung eines Scheuerkörpers, wobei auf eine Materialbahn aus Textilmaterial ein aushärtbarer Binder aufgebracht wird und die Materialbahn anschließend zu mindestens einem Wärmeaushärtvorgang durch mindestens eine Erwärmungszone geführt wird und wobei die Materialbahn in einem Prägevorgang durch Warmverformung eine Oberflächenprägung erhält.

Derartige Scheuerkörper weisen eine durch Prägung profilierte Arbeitsfläche auf und sind insbesondere vorgesehen und geeignet für Reinigungs- und Scheuervorgänge. Die Scheuerkörper können jeweils an einen Träger gebunden sein, der ein anderes textiles Gebilde, ein Schaumstoffkörper oder ein Kunststoffkörper sein kann.

Zur Herstellung dieser Scheuerkörper wird üblicherweise auf eine Materialbahn aus Textilmaterial ein Binder aufgebracht. Die Materialbahn wird dann durch eine Erwärmungszone geführt, wobei der Binder aushärtet. Die Aufbringung des Binders kann einseitig oder zweiseitig erfolgen. Die Materialbahn kann durch mehrere Erwärmungszonen geführt werden, wobei zunächst eine teilweise Aushärtung des Binders und abschließend eine vollständige Aushärtung erfolgt.

Der unter Warmverformung ausgeführte Prägevorgang zur Profilierung der Oberfläche erfolgt bisher im Anschluss an die abschließende Aushärtung des Binders (EP 0 696 432 B1). Der Prägevorgang kann in einem kontinuierlichen Arbeitsablauf unmittelbar im Anschluss an die endgültige Aushärtung des Binders erfolgen; es ist aber auch möglich, den Prägevorgang auf einer gesonderten Maschine auszuführen.

Insbesondere bei der Verwendung von sich unter Wärmeeinwirkung verfestigenden Bindersystemen kommt es bei der nachträglichen Warmverformung zum Zwecke der Prägung zu einer Versprödung, Schädigung und damit Schwächung des Materials. Diese Schädigung ist zum größten Teil auf eine mechanische und/oder thermische Beanspruchung des Binders zurückzuführen. Damit sind die nach diesem Herstellungsverfahren erhaltenen Produkte häufig der Belastung nicht mehr gewachsen, die bei der Anwendung als Reinigungs- oder Scheuerkörper auftreten.

Aufgabe der Erfindung ist es daher, ein Verfahren der eingangs genannten Gattung zu schaffen, durch das eine Schädigung oder Beeinträchtigung des Binders durch den unter Wärmeeinwirkung durchgeführten Prägevorgang ausgeschlossen oder zumindest minimiert wird.

Diese Aufgabe wird erfindungsgemäß dadurch gelöst, dass die Warmumformung für den Prägevorgang zwischen der Aufbringung des Binders und einem die Endaushärtung des Binders bewirkenden abschließenden Wärmeaushärtvorgang durchgeführt wird.

Dadurch wird erreicht, dass eine Schädigung des Produkts verhindert oder zumindest weitestgehend minimiert wird und somit ein für die Verwendung als Reinigungs- oder Scheuerkörper geeignetes Produkt entsteht.

Gemäß einer vorteilhaften Ausgestaltung der Erfindung ist vorgesehen, dass die Warmumformung für den Prägevorgang unmittelbar vor dem die Endaushärtung des Binders bewirkenden abschließenden Wärmeaushärtvorgang durchgeführt wird.

Wenn dem abschließenden Wärmeaushärtvorgang ein oder mehrere Teil-Wärmeaushärtvorgänge vorgeschaltet ist bzw. sind, kann die Wärmeumformung für den Prägevorgang vor dem Teil-Wärmeaushärtvorgang bzw. einem der Teil-Wärmeaushärtvorgänge durchgeführt werden.

Der Prägevorgang kann durch Rollen, Walzen, Pressen oder Stanzen erfolgen.

Die Erfindung wird nachfolgend an Ausführungsbeispielen näher erläutert, die in der Zeichnung dargestellt sind. Es zeigt:
Fig. 1 in schematischer Darstellungsweise einen Verfahrensablauf zur Herstellung eine Materialbahn für Scheuerkörper und
Fig. 2 in einer Darstellung entsprechend der Fig. 1 einen abgewandelten Verfahrensablauf.

Auf eine Materialbahn 1 aus Textilmaterial, beispielsweise aus Polyamidfasern, wird in einer ersten Station 2 ein aushärtbarer Binder aufgebracht. Die Binderaufbringung kann durch Sprühen, Aufstreichen, Foulardieren oder durch ein Bad erfolgen. Anschließend wird die Materialbahn kontinuierlich durch eine erste Erwärmungszone 3 geführt, wobei eine teilweise Aushärtung des Binders erfolgt. Sodann läuft die Materialbahn 1 über eine Walze 4 und wird dabei gewendet. In einer zweiten Station 5 wird der Binder auf die zweite Seite der Materialbahn 1 aufgebracht.

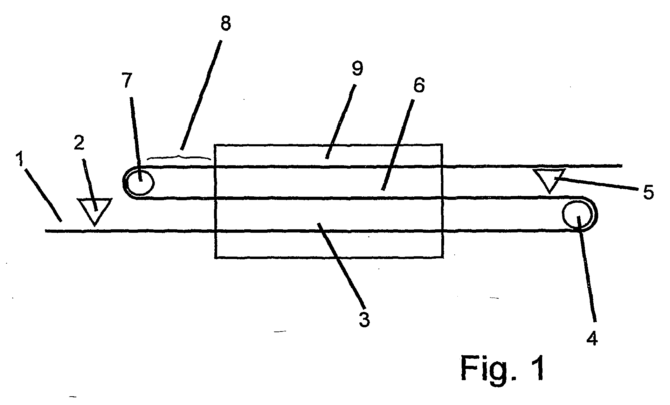

Die Materialbahn läuft sodann durch eine zweite Erwärmungszone 6, wobei auch der in der zweiten Station 5 aufgebrachte Binder teilweise aushärtet. Über eine Walze 7 läuft die Materialbahn zu einer in Fig. 1 nur angedeuteten Prägestation 8, in der die Oberflächenstruktur unter Warmverformung geprägt wird. Der Prägevorgang kann durch Rollen, Walzen, Pressen oder Stanzen erfolgen.

Danach läuft die geprägte Materialbahn in eine dritte Erwärmungszone 9, in der die Endaushärtung des Binders durch einen abschließenden Wärmeaushärtvorgang durchgeführt wird.

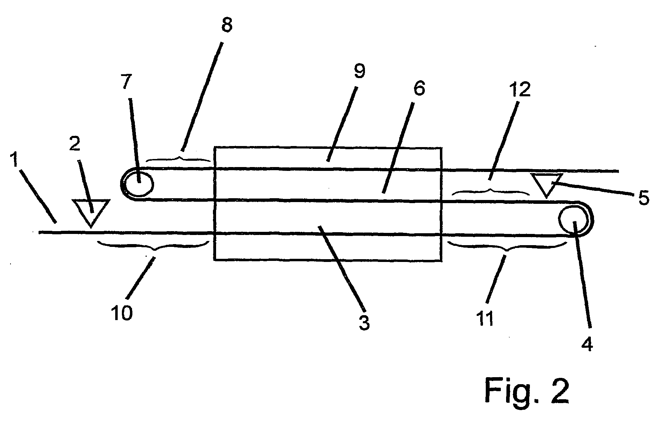

Bei dem in Fig. 2 dargestellten Ausführungsbeispiel durchläuft die aus Textilfasern bestehende Materialbahn 1 ebenfalls nacheinander die drei Erwärmungszonen 3, 6 und 9, wobei die Aufbringung des Binders wie schon beschrieben in den Stationen 2 und 5 erfolgt.

Der Unterschied zu dem vorher beschriebenen Ausführungsbeispiel besteht darin, dass die Prägung der Oberfläche durch Warmverformung in einer Prägestation 10 vor der ersten Erwärmungszone 3, in einer Prägestation 11 zwischen der ersten und der zweiten Erwärmungszone 3 bzw. 6 oder in einer Prägestation 12 unmittelbar vor der zweiten Erwärmungszone 6 erfolgt.

Den beschriebenen Ausführungsbeispielen ist gemeinsam, dass die Warmumformung für den Prägevorgang zwischen der Station 2, in der erstmalig Binder aufgebracht wird, und der dritten Erwärmungszone 9 durchgeführt wird, in der die Endaushärtung des Binders durch einen abschließenden Wärmeaushärtvorgang bewirkt wird. Die Warmverformung für den Prägevorgang erfolgt somit in jedem Fall vor der letzten Erwärmungszone 9, wobei die in der Zeichnung dargestellten Prägestationen nur mögliche Anwendungsbeispiele sind, gegenüber denen auch weitere Varianten möglich sind.

Die Wärme wird in den Erwärmungszonen 3, 6 und 9 so gesteuert, dass die Aushärtung des Binders in den Erwärmungszonen 3 und 6 nur partiell erfolgt, während die Endaushärtung in der letzten Erwärmungszone 9 erfolgt.

Beispiele für verwendete Binder sind Phenol-FormaldehydHarze, Acrylate, Melaminharze oder Polyurethane.

## Patentansprüche

1. Verfahren zur Herstellung eines Scheuerkörpers, wobei auf eine Materialbahn (1) aus Textilmaterial ein aushärtbarer Binder aufgebracht wird und die Materialbahn (1) anschließend zu mindestens einem Wärmeaushärtvorgang durch mindestens eine Erwärmungszone (3, 6) geführt wird und wobei die Materialbahn (1) in einem Prägevorgang durch Warmverformung eine Oberflächenprägung erhält, **dadurch gekennzeichnet, dass** die Warmumformung für den Prägevorgang zwischen der Aufbringung des Binders und einem die Endaushärtung des Binders bewirkenden abschließenden Wärmeaushärtvorgang durchgeführt wird.

2. Verfahren nach Anspruch 1, **dadurch gekennzeichnet, dass** die Warmumformung für den Prägevorgang unmittelbar vor dem die Endaushärtung des Binders bewirkenden abschließenden Wärmeaushärtvorgang durchgeführt wird.

3. Verfahren nach Anspruch 1, **dadurch gekennzeichnet, dass** dem abschließenden Wärmeaushärtvorgang ein oder mehrere Teil-Wärmeaushärtvorgänge vorgeschaltet ist bzw. sind und dass die Wärmeumformung für den Prägevorgang vor dem Teil-Wärmeaushärtvorgang bzw. einem der Teil-Wärmeaushärtvorgange durchgeführt wird.

4. Verfahren nach einem der Ansprüche 1-3, **dadurch gekennzeichnet, dass** der Prägevorgang durch Rollen, Walzen, Pressen oder Stanzen erfolgt.

## Claims

1. Method for manufacturing a scouring body, a curable binder being applied to a material web (1) made from textile material, and the material web (1) subsequently being guided through at least one heating zone (3, 6) for at least one thermal curing operation, and the material web (1) being given a surface embossing in an embossing operation by hot deformation, **characterized in that** the hot deformation for the embossing operation is carried out between the application of the binder and a final thermal curing operation which brings about final curing of the binder.

2. Method according to Claim 1, **characterized in that** the hot deformation for the embossing operation is carried out immediately before the final thermal curing operation which brings about final curing of the binder.

3. Method according to Claim 1, **characterized in that** one or more partial thermal curing operations is/are performed before the final thermal curing operation, and **in that** the thermal deformation for the embossing operation is carried out before the partial thermal curing operation or one of the partial thermal curing operations.

4. Method according to one of Claims 1 to 3, **characterized in that** the embossing operation takes place by rolling, milling, pressing or punching.

## Revendications

1. Procédé de fabrication d'un corps de récurage dans lequel un liant durcissable est appliqué sur une nappe (1) de matériau textile, la nappe (1) de matériau étant ensuite passée dans au moins une zone de chauffage (3, 6) pour au moins une opération de durcissement thermique et dans lequel la surface de la bande de matériau (1) est gaufrée par une opération de gaufrage par déformation thermique, **caractérisé en ce que** la déformation thermique de l'opération de gaufrage est réalisée entre l'application du liant et une opération finale de durcissement thermique qui a pour effet le durcissement final du liant.

2. Procédé selon la revendication 1, **caractérisé en ce que** la déformation thermique destinée à l'opération de gaufrage est réalisée immédiatement avant l'opération finale de durcissement thermique qui a pour effet le durcissement final du liant.

3. Procédé selon la revendication 1, **caractérisé en ce qu'**une ou plusieurs opérations de durcissement thermique partiel précèdent l'opération finale de durcissement thermique et **en ce que** la déformation thermique destinée à l'opération de gaufrage est réalisée avant l'opération de durcissement thermique partiel ou une des opérations de durcissement thermique partiel.

4. Procédé selon l'une des revendications 1 à 3, **caractérisé en ce que** l'opération de gaufrage s'effectue à l'aide de rouleaux, par laminage, pressage ou emboutissage.
